# EUROPEAN PATENT APPLICATION

(11) **EP 4 027 305 A1**
(43) Date of publication of application: **13.07.2022**
(21) Application number: 21218498.0
(22) Date of filing: 31.12.2021
(51) Int. Cl.: G06V 10/44, G06V 10/774, G06V 20/58

(54) **TRAFFIC LIGHT DETECTION**

(30) Priority: 05.01.2021 GB 202100066
(71) Applicant: Nissan Motor Manufacturing (UK) Limited, Cranfield, Bedfordshire MK43 0DB (GB)
(72) Inventor: SHAH, Nirav, Cranfield, MK43 0DB (GB); SANO, Yasuhito, Cranfield, MK43 0DB (GB); HIROKI, Taniguchi, Cranfield, MK43 0DB (GB)
(74) Representative: Keltie LLP

(57) **Abstract**

Aspects of the present invention relate to methods (20) of training a neural network for traffic light detection. In particular, an aspect of the invention relates to a computer-implemented method (20) of training a neural network for identification of a forward-facing traffic light (102) in an image. The method comprises: receiving a first set of images, each image in the first set of images comprising an annotated region, wherein the annotated region is a labelled region of said image that includes a forward-facing traffic light (102); generating a second set of images based on one or more of the images in the first set of images, wherein generating each image of the second set of images comprises modifying a respective image in the first set of images using a data augmentation technique; and training the neural network to identify the annotated region in each image of the first and second sets of images.

## Description

### TECHNICAL FIELD

The present disclosure relates to methods of training a neural network for traffic light detection. Aspects of the invention relate to a method, to a computer program and to a computer-readable data carrier.

### BACKGROUND

Contemporary vehicles are known that feature object detection and classification systems configured to detect and classify objects in the path of the vehicle. Such object detection and classification systems are increasingly commonplace due to the technological developments in sensory technologies and the improved capabilities of the on-board processing devices.

One challenge with such object detection and classification systems is that they are processor intensive. Hence, there is a need to minimise the processing requirements of the object detection and classification tasks, whilst ensuring that objects are reliably detected and accurately classified.

It is an aim of the present invention to address one or more of the disadvantages associated with the prior art.

### SUMMARY OF THE INVENTION

According to an aspect of the invention there is provided a computer-implemented method of training a neural network for identification of a forward-facing traffic light in an image. The method comprises: receiving a first set of images, each image in the first set of images comprising an annotated region, wherein the annotated region is a labelled region of said image that includes a forward-facing traffic light; generating a second set of images based on one or more of the images in the first set of images, wherein generating each image of the second set of images comprises modifying a respective image in the first set of images using a data augmentation technique; and training the neural network to identify the annotated region in each image of the first and second sets of images.

In this manner, the method produces an enlarged, augmented, set of images (that includes the first and second sets of images) for training a neural network to identify forward-facing traffic lights. The data augmentation technique may be used to produce additional images with different augmented features or visual effects, for example replicating different lighting and/or weather conditions. Simultaneously, the data augmentation preserves the annotated region in the second set of images so that further user inputs are not required label the images ready for training purposes.

Optionally, for one or more images in the second set of images, the data augmentation technique comprises at least one of: adjusting a colour appearance parameter of the respective image or of the forward-facing traffic light in the respective image; flipping the respective image or the forward-facing traffic light in the respective image; shifting the forward-facing traffic light in the respective image; adjusting a size of the forward-facing traffic light in the respective image; and applying a jitter function to the respective image. A colour appearance parameter may be adjusted to vary an amount of lighting to reflect a different time of day, for example. The respective image may be flipped to mitigate positional bias in the training of the neural network where the first set of images are determined by a camera disposed in a particular vehicle position, for example a monocular camera disposed on the left hand side of a vehicle will produce positionally biased images. The forward-facing traffic light may be shifted for a number of advantageous reasons, including to mitigate positional bias in the training of the neural network. The size of the forward-facing traffic light may be adjusted to mitigate dimensions bias in the training of the neural network, for example where camera images are predominately taken at a fixed distance from a traffic light. The jitter function may be applied to train the neural network to mitigate noise in a camera image, for example.

Optionally, the colour appearance parameter is a brightness and/or a contrast of the respective image.

In an example, the colour appearance parameter of the respective image may be adjusted to change a perceived time of day or weather condition in the respective image. Optionally, the neural network is a convolutional neural network. For example, the convolutional neural network may be a region-based convolutional neural network.

According to another aspect of the invention there is provided a computer-implemented method of re-training a neural network for identification of a forward-facing traffic light in an image. The method comprises: initialising a neural network trained for identification of a traffic light in an image, (e.g. prior to receiving the first set of images); and re-training the neural network for the identification of a forward-facing traffic light in an image according to a method described in a previous aspect of the invention. In other words, re-training the neural network for the identification of a forward-facing traffic light in an image by receiving the first set of images; generating a second set of images based on one or more of the images in the first set of images, wherein generating each image of the second set of images comprises modifying a respective image in the first set of images using a data augmentation technique; and training the neural network to identify the annotated region in each image of the first and second sets of images. In this manner, the neural network may be initialised for identification of traffic lights generally, before being trained based on the first and second sets of images for identification of forward-facing traffic lights.

The initial neural network may, for example, comprise a first set of feature maps. Training the neural network to identify the annotated region in each image of the first and second sets of images may, for example, comprise generating a second set of feature maps, adapted from the first set of feature maps, for the identification of a forward-facing traffic light in an image.

According to a further aspect of the invention there is provided a computer program comprising instructions which, when the program is executed by a computer, cause the computer to carry out the method described in one of the previous aspects of the invention.

According to another aspect of the invention there is provided a computer-readable data carrier having stored thereon the computer program described in a previous aspect of the invention.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic illustration of an example vehicle in accordance with an embodiment of the invention;
Figure 2 shows a schematic illustration of an example control system in accordance with an embodiment of the invention for the vehicle shown in Figure 1;
Figure 3 illustrates an example method in accordance with an embodiment of the invention of training the control system to detect forward-facing traffic lights in an image, shown in Figure 2;
Figure 4 illustrates an example set of images generated according to the method shown in Figure 3;
Figure 5 illustrates an example method in accordance with an embodiment of the invention of operating the control system, shown in Figure 2, to determine a bounding box proposal for a forward-facing traffic light in an image;
Figure 6 shows an illustration of a set of anchors applied to the image in accordance with the method shown in Figure 5;
Figure 7 shows an illustration of a bounding box proposal applied to the image in accordance with the method shown in Figure 5;
Figure 8 illustrates an example method in accordance with an embodiment of the invention of operating the control system, shown in Figure 2, to determine the status of a traffic light detected in an image;
Figure 9 illustrates an example image of a forward-facing traffic light;
Figure 10 illustrates a cropped example image of a forward-facing traffic light in accordance with the method shown in Figure 8;
Figure 11 illustrates the image shown, in Figure 10, divided into three light emitting portions in accordance with the method shown in Figure 8;
Figure 12 illustrates the intensity of each of the light emitting portions shown, in Figure 11, in a first status of the traffic light, shown in Figure 9;
Figure 13 illustrates example sub-steps for determining the status of the traffic light, shown in Figure 9, in accordance with the method shown in Figure 8;
Figures 14 to 16 illustrates the intensity of each of the light emitting portions, shown in

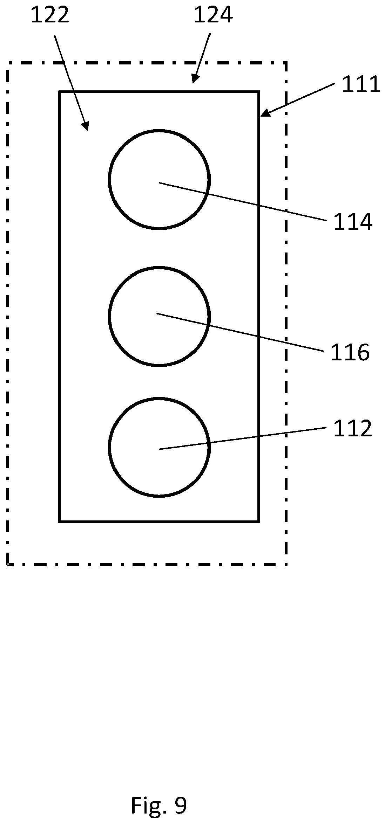

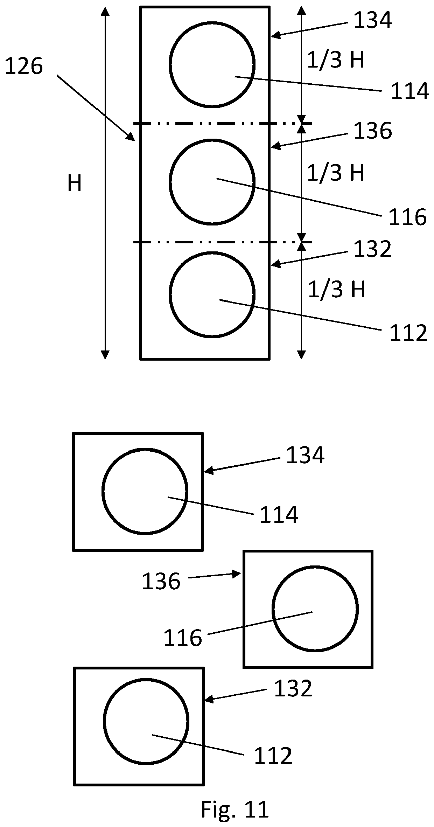

Figure 11, in a second, a third, and a fourth status of the traffic light, shown in Figure 9, respectively; and

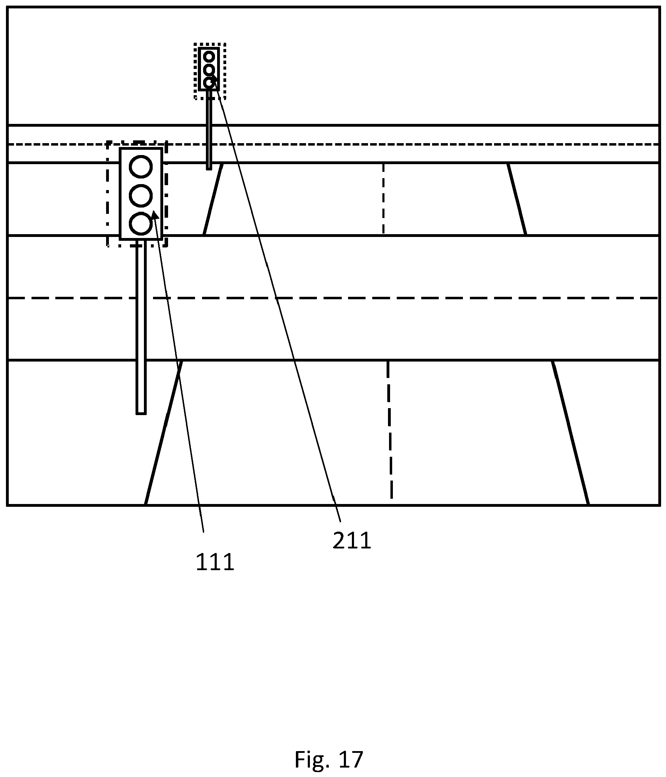

Figure 17 illustrates another example image of a forward-facing traffic light.

### DETAILED DESCRIPTION

Embodiments of the invention relate to a method of training a neural network for the identification of a forward-facing traffic light in an image, to a method of detecting and classifying a forward-facing traffic light in an image and to a method of determining the status of a traffic light detected in an image.

It shall be appreciated that the area of interest for determining the status of a traffic light is the rectangular area or face of the traffic light that includes the three traffic light signals, namely: the proceed-signal, the stop-signal and the caution-signal, otherwise known as the transition-signal.

Hence, for the sake of clarity, the references to a 'traffic light', in the following description, are intended to refer to this rectangular area of the traffic light.

It follows that, by 'forward-facing' it is intended to mean that the face of the traffic light faces in the general direction of the vehicle, and/or the camera/sensor recording the image, such that a signal output from one or more of the proceed-signal, the stop-signal and/or the caution-signal may be detected.

Hence, a traffic light that controls the traffic from a neighbouring roadway, facing away or 'side-on' to the vehicle, and/or the camera/sensor recording the image, would not fall within the scope of the term 'forward-facing', as shall become clear in the following examples.

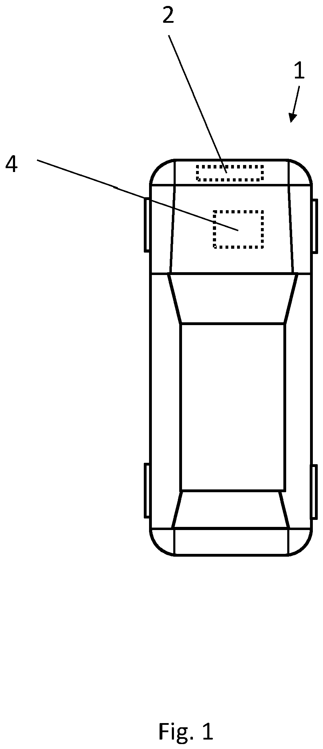

Figure 1 schematically illustrates an example vehicle 1 featuring a sensor system 2 and a control system 4 for detecting a forward-facing traffic light in the path of the vehicle 1 and determining a status of the forward-facing traffic light, in accordance with an embodiment of the invention.

The sensor system 2 comprises one or more optical sensors configured to determine an image corresponding to a field of view arranged ahead of the vehicle 1. For example, the sensor system 2 may include one or more LIDAR sensors, RADAR sensors, infrared sensors and/or camera sensors arranged to observe and record image data corresponding to the field of view.

The sensor system 2 is configured to output the image to the control system 4, which is configured to process the image, detect any forward-facing traffic lights in the image and determine the status of the detected traffic lights.

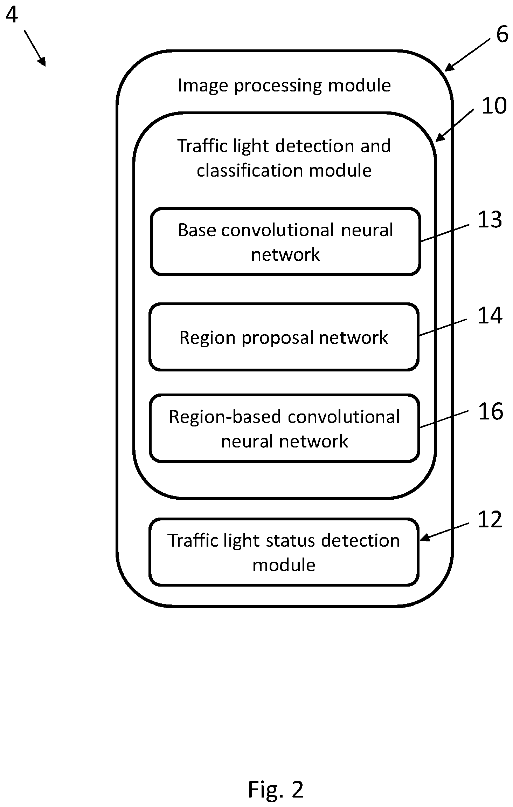

The control system 4 will now be described in more detail with additional reference to Figure 2, which schematically illustrates an example of the control system 4 in accordance with an embodiment of the invention.

As shown in Figure 2, the control system 4 includes an image processing module 6, which may take the form of an object detection and classification system, for example.

The image processing module 6 includes a traffic light detection and classification module 10 and a traffic light status detection module 12.

The traffic light detection and classification module 10 is configured to determine an area of the image that includes a traffic light-shaped object and to classify the traffic-light shaped object as a forward-facing traffic light or otherwise.

For this purpose, the traffic light detection and classification module 10 includes one or more neural networks, including a base convolutional neural network 13, a region proposal network 14 and a classifier convolutional neural network 16.

The base convolutional neural network 13 includes a trained set of filters corresponding to features of forward-facing traffic lights and the base convolutional neural network 13 is configured to determine a convolutional feature map by applying the set of filters to the image received from the sensor system 2. The base convolutional neural network 13 is also configured to output the convolutional feature map to the region proposal network 14 and the classifier convolutional neural network 16.

The region proposal network 14 is configured to receive the convolutional feature map and to determine one or more bounding box proposals corresponding to any traffic light-shaped objects in the image based on the convolutional feature map.

The regional proposal network 14 is configured to determine the one or more bounding box proposals based on a set of anchor boxes, i.e. rectangular areas of different sizes and aspect ratios, placed throughout the convolutional feature map.

The set of anchor boxes are defined by a set of sizes (e.g. 64 pixels, 128 pixels, 256 pixels) and a set of aspect ratios between height and width. Advantageously, each aspect ratio in the set of aspect ratios has greater height than width so that the set of anchor boxes formed by all the possible combinations of sizes and aspect ratios are elongate in the height dimension. These aspect ratios reflect the elongate rectangular shape of the face of a vertical traffic light, which reduces the computational requirements for determining the bounding box proposals, as shall become clear in the following description.

The region proposal network 14 is further configured to output the one or more bounding box proposals to the classifier convolutional neural network 16.

The classifier convolutional neural network 16 is configured to: i) receive the convolutional feature map and the one or more bounding box proposals; and ii) to apply Region of Interest (Rol) Pooling based on the one or more bounding box proposals, to extract features corresponding to the respective traffic light objects from the convolutional feature map.

The classifier convolutional neural network 16 uses the extracted features to classify the content in each proposed bounding box as a forward-facing traffic light or otherwise and may adjust the coordinates of the proposed bounding box so that the bounding box fits the forward-facing traffic light more precisely and/or accurately.

Accordingly, the output from the classifier convolutional neural network 16 is a refined bounding box that classifies an area of the image received from the sensor system 2 as a forward-facing traffic light. This area, or portion, of the image is output to the traffic light status detection module 12.

In an example, the base convolutional neural network 13, the region proposal network 14 and the classifier convolutional neural network 16 may be integrated in a known manner so that the traffic light detection and classification module 10 takes the structural form of a "Faster regional convolutional neural network" (Faster RCNN), which is well known in the art. See, for example, Ren, S., He, K., Girshick, R. and Sun, J., 2017. 'Faster R-CNN: Towards Real-Time Object Detection with Region Proposal Networks' as published in IEEE Transactions on Pattern Analysis and Machine Intelligence, 39(6), pp.1137-1149 for further information.

The traffic light status detection module 12 is configured to receive an image containing a forward-facing traffic light, i.e. a traffic light image, and to determine a status of the forward-facing traffic light. In other words, the traffic light status detection module 12 determines whether the forward-facing traffic light is outputting a stop-signal or a proceed-signal based on the received traffic light image.

In this manner, as the vehicle 1 drives along a roadway, in use, the sensor system 2 is configured to determine one or more images corresponding to the field of view ahead of the vehicle 1. If the roadway includes a traffic light facing towards the vehicle 1, the sensor system 2 records an image that includes the forward-facing traffic light and the control system 4 is configured to determine the status of that traffic light based on that image.

The traffic light status detection module 12 may be further configured to output the determined status of the forward-facing traffic light to one or more other control systems (not shown) of the vehicle 1 for controlling a corresponding operation of the vehicle 1.

For example, the determined status of the forward-facing traffic light may be output to a vehicle speed control system (not shown) to cause the vehicle 1 to decelerate to a standstill at the traffic light in dependence on the forward-facing traffic light outputting a stop-signal.

It shall be appreciated that the control system 4 may include one or more controllers for the purposes described above and each controller may comprise a control unit or computational device having one or more electronic processors.

A set of instructions may be provided that cause the one or more controllers, or control units, to implement a control method, such as the control methods described herein, when executed. The set of instructions may be embedded in one or more of the electronic processors. Alternatively, the set of instructions may be provided as software to be executed by one or more of the electronic processors.

The set of instructions may be embedded in a computer-readable storage medium (e.g., a non-transitory computer-readable storage medium) that may comprise any mechanism for storing information in a form readable by a machine or electronic processors/computational device. This may include, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM and EEPROM); flash memory; or electrical or other types of medium for storing such information/instructions.

In order for the object detection and classification module 10 to process information and determine the bounding boxes for the forward-facing traffic lights, the one or more neural networks must be trained based on a training data set of images comprising forward-facing traffic lights.

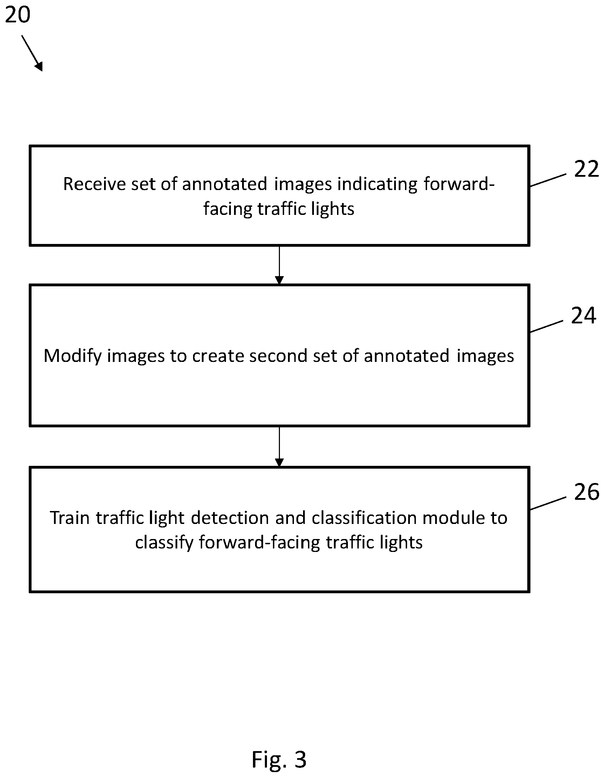

Figure 3 shows an example method 20 of determining a training set of images for training the object detection and classification module 10 to identify a forward-facing traffic light in an image in accordance with an embodiment of the invention.

In step 22, an initial data set for training the traffic light detection and classification module 10 is determined or received.

The initial data set comprises a first set of annotated images for training the traffic light detection and classification module 12 to detect and classify forward-facing traffic lights.

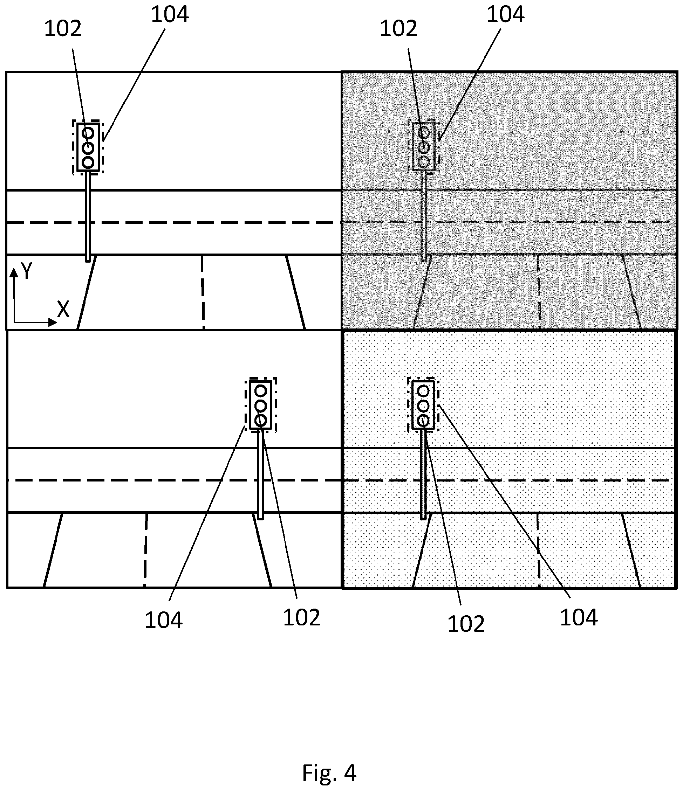

The images of the first set of annotated images may take the form of two-dimensional arrays of pixels, each having a height of Y pixels and a width of X pixels, for example. Each image may include a forward-facing traffic light 102 and a bounding box 104, or annotated region, for each forward-facing traffic light 102 in that image, as shown in Figure 4.

Each bounding box 104 may be defined by a first point having co-ordinates x1, y1, in the respective image and a second point, at a diagonally opposite corner of the bounding box, having co-ordinates x2, y2, in the respective image.

The first set of annotated images are generated in an 'offline' manner and the method of generation is not intended to be limiting on the scope of the invention. However, for the sake of clarity, in an example, the first set of annotated images may be generated by the manufacturer, for example by driving a vehicle that includes a vehicle camera on one or more data capture journeys, during which a plurality of images are recorded that include forward-facing traffic lights. Using such images, the bounding box co-ordinates may be provided by one or more user inputs provided by a skilled operator, for example via a computing device.

In step 24, a modified data set for training the traffic light detection and classification module 10 is determined based on the initial data set.

In particular, in step 24, a second set of annotated images is generated based on one or more of the images in the first set of annotated images. Each image of the second set of annotated images is generated by modifying a respective image in the first set of annotated images using a data augmentation technique.

By way of example, Figure 4 shows an image from the first set of annotated images (top-left) with a bounding box 104 illustrated around the forward-facing traffic light 102. Figure 4 also shows first, second and third images from the second set of annotated images, with a bounding box 104 illustrated around the forward-facing traffic light 102 in each image.

As shall become clear, each of the first, second and third images in the second set of annotated images is generated by modifying the respective image in the first set of annotated images using a different data augmentation technique.

For the sake of simplicity, the image from the first set of annotated images is referred to as the original image in the following description and the first, second and third images from the second set of annotated images are referred to as the first, second and third augmented images respectively.

In particular, the first augmented image (top-right) is generated by adjusting a colour appearance parameter of the original image to reduce the brightness of the original image. As illustrated, the position of the forward-facing traffic light 102 is unchanged from the original image, and so the bounding box 104 has the same co-ordinates in the first augmented image (top-right) as in the original image. In this example, the brightness of the original image is reduced to mimic a low-level day light situation.

Similarly, the second augmented image (bottom-left) is generated by applying a horizontal flip to the original image. In other words, the second augmented image (bottom-left) is generated by reflecting the original image about an vertical axis arranged at the rightmost edge of the original image As illustrated, the position of the forward-facing traffic light 102 is changed by the horizontal flip, but the function relating the two positions is known and so the bounding box position 104 is adjusted accordingly to a corresponding position in the second augmented image. In this example, the horizontal flip is used to mitigate bias in the traffic light position, as the first set of annotated images may be taken from a monocular (single lens) camera, e.g. arranged on the right side of the vehicle. By flipping the image, the position of the camera is effectively changed.

The third augmented image (bottom-right) is generated by applying a filter to the original image that corresponds to a different weather condition, i.e. adding the effects of rainfall to the original image. As illustrated, the position of the forward-facing traffic light 102 is unchanged from the original image, and so the bounding box 104 has the same co-ordinates in the third augmented image (bottom-right) as in the original image.

In this manner, a multitude of images may be generated based on selected ones of the images in the first set of annotated images such that the second set of annotated images includes a plurality of images and each image in the second set of annotated images corresponds to a respective image in the first set of annotated images, the respective image being modified by a data augmentation technique.

Although not shown here, in other examples, the data augmentation technique may comprise at least one of: adjusting a colour appearance parameter of the respective image or of the forward-facing traffic light 102 in the respective image; flipping the respective image or the forward-facing traffic light 102 in the respective image; shifting the forward-facing traffic light 102 in the respective image; adjusting a size of the forward-facing traffic light 102 in the respective image; and applying a jitter function to the respective image, as would be well understood by the skilled person.

As a result, the modified data set can be used alongside the initial data set, providing an, artificially generated, enlarged data set for training the traffic light detection and classification module 10.

More specifically, the modified data set can generate an enlarged data set that includes different visual effects that influence the ability of the image processing module 6 to recognise forward-facing traffic lights within said images. Such visual effects may replicate different weather conditions and/or times of day, amongst other lighting conditions, producing a modified data set that could otherwise only have been determined by an extensive image recording process. Consequently, the method significantly reduces the time, costs and resources required to produce the training set of images.

Accordingly, in step 26, the traffic light detection and classification module 10 is trained to determine the position and size of the bounding box 104 for the forward-facing traffic lights 102 in each image of the first and second sets of images.

In particular, the weights of the filters used in the base convolutional neural network 13 are refined to determine suitable filters for identifying forward-facing traffic lights.

The region proposal network 14 is trained to identify traffic-light shaped objects, i.e. objects that are distinct from the background and relatively tall, having a greater height than width.

The classifier convolutional neural network 16 is trained to identify forward-facing traffic light features and distinguish such features from other traffic-light shaped object features.

Methods of training a neural network based on a training set of images are well-known in the art and are not described in detail here to avoid obscuring the invention. Nonetheless, more information can be found, for example, in "Deep Learning in Object Detection and Recognition" by X. Jiang, A. Hadid, Y. Pang, E. Granger, and X. Feng (2020) and in "Object Detection With Deep Learning: A Review," by Z. Zhao, P. Zheng, S. Xu and X. Wu, in IEEE Transactions on Neural Networks and Learning Systems, vol. 30, no. 11, pp. 3212-3232, (Nov. 2019).

In an example, the traffic light detection and classification module 10 may be pre-trained for the detection and classification of traffic lights in images using the ImageNet dataset or another suitable dataset of annotated traffic light images, prior to determining the first set of images in step 22.

In particular, the weight of the filters used in the base convolutional neural network 13 may be initialised from a base convolutional neural network trained to identify traffic lights (facing in any direction) in a set of annotated images provided by ImageNet. This training technique, also known as transfer learning, is commonly used for training such a classifier on a small dataset using the weights of a network trained on a bigger, more generic, dataset.

Once trained, the traffic light detection and classification module 10 is configured to detect a forward-facing traffic light in an image, determine a bounding box around that forward-facing traffic light and classify the contents of that bounding box as a forward-facing traffic light or otherwise, i.e. not a forward-facing traffic light.

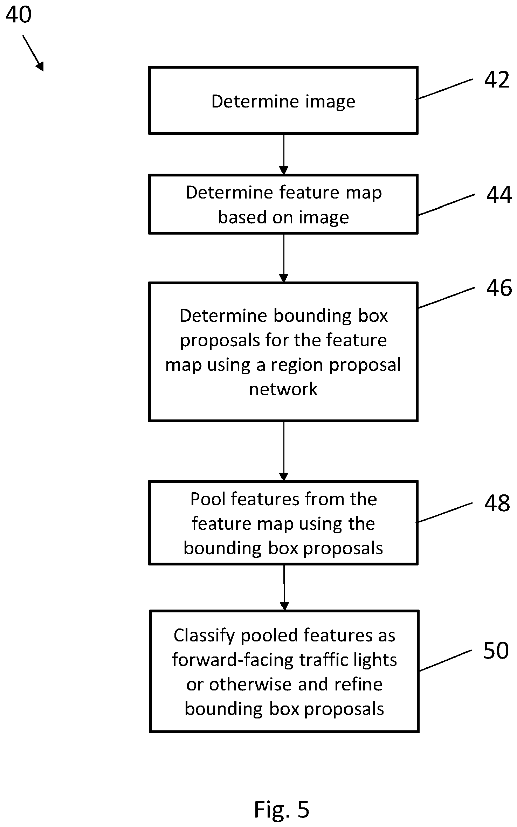

Figure 5 shows an example method 40 of operating the control system 4 to identify a forward-facing traffic light in an image in accordance with an embodiment of the invention.

In step 42, the vehicle 1 is driving along a roadway and approaches a traffic light at a road junction. As the vehicle 1 approaches the road junction, the sensor system 2 determines an image corresponding to the path ahead of the vehicle 1 and the image is output to the traffic light detection and classification system 10.

In step 44, the traffic light detection and classification system 10 determines a convolutional feature map based on the image received from the sensor system 2.

The image is represented as a Height x Width x Depth array, such as an X pixel x Y pixel, RGB image), which is passed through the base convolutional neural network 13 to determine a convolutional feature map for said image.

In particular, the base convolutional neural network 13 applies the trained set of filters to determine a convolutional feature map of size conv_{width} x conv_{height} x conv_{depth}, where conv_{width} is the width of the convolutional feature map, conv_{height} is the height of the convolutional feature map, and conv_{depth} is the depth of the convolutional feature map, which corresponds to the number of filters in the trained set of filters.

The width and height of the feature map decrease relative to the original image because of the pooling applied between convolutional layers. The depth increases based on the number of filters used.

In step 46, the traffic light detection and classification system 10 determines one or more bounding box proposals intended to identify any traffic light-shaped objects in the image based on the convolutional feature map.

Each bounding box proposal is a rectangular area of the image with an "objectness score", corresponding to a probability that a traffic light-shaped object exists in that area.

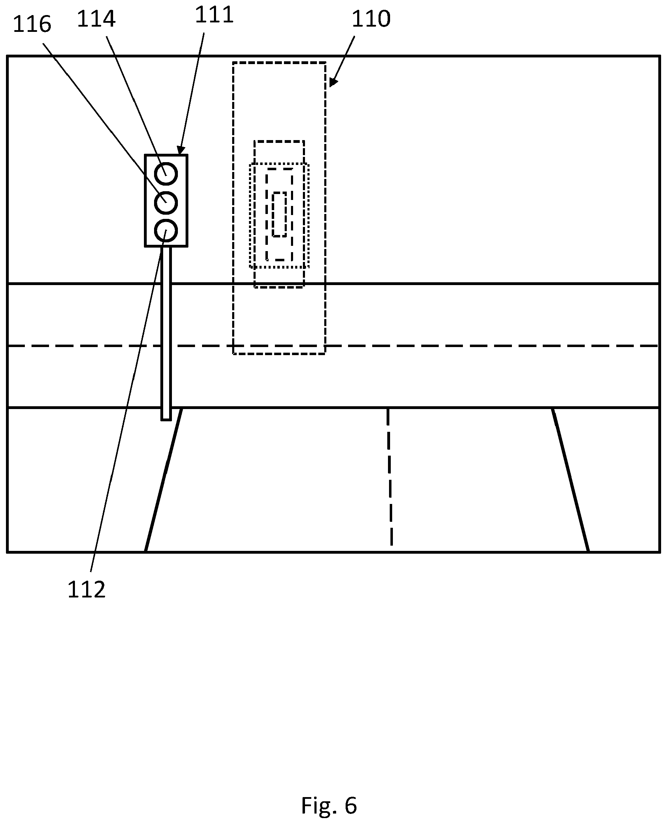

For this purpose, the region proposal network 14 uses each point in the feature map generated by the base convolutional neural network 13 as an anchor point. For each anchor point, the region proposal network 14 applies a set of anchor boxes 110, i.e. rectangular areas of different scales and aspect ratios, centred at said anchor point, to determine whether each anchor box includes a traffic light-shaped object or not, as shown in Figure 6.

Conventionally, the set of anchor boxes are defined by a set of sizes (e.g. 64px, 128px, 256px) and a set of aspect ratios between a width and a height of the anchor boxes (e.g. 0.5, 1, 1.5). The set of anchor boxes is then generated based on all of the possible combinations of the sizes and the aspect ratios and the set of anchor boxes is used to distinguish any foreground objects from any background features.

Advantageously, in the present invention, the region proposal network 14 is configured to detect and locate any traffic-light shaped objects based on a set of anchor boxes 110 defined by a set of sizes and a set of aspect ratios in which each aspect ratio has a height of the anchor box greater than a width of the anchor box.

This takes advantage of the fact that the faces of traffic lights are standardised such that they are rectangular and relatively tall, having a greater height than width. Hence, the region proposal network 14 uses a set of anchor boxes 110 having greater height than width to reduce the computational requirements of detecting traffic lights in the image.

Considered in more detail, a traffic light 111 is standardised such that the traffic light 111 includes three vertically stacked traffic light signals, namely a proceed-signal 112, a stop-signal 114 and a caution-signal 116, as shown in Figure 6. The caution-signal 116 is otherwise known as a transition-signal that indicates an imminent transition between the stop-signal 114 and the proceed-signal 112. Consequently, the height of the traffic light 111 is approximately three times the width of the traffic light.

Hence, in an example, the region proposal network 14 uses a set of anchor boxes 110 having an aspect ratio of between height > 2.5 width and height < 3.5 width. Advantageously, the computational requirements of detecting traffic lights may be further reduced in this manner.

It shall be appreciated that the same principles apply to detecting horizontally extending traffic lights, where the traffic light are horizontally oriented with three signal portions arranged adjacent to one another along a horizontal axis. Hence, to detect horizontally oriented traffic lights, the region proposal network 14 may be adapted to detect such traffic lights based on a set of anchor boxes each having an aspect ratio of width that is greater than height in a corresponding manner.

In step 46, the region proposal network 14 is trained to determine a probability that an anchor box 110 comprises a traffic-light shaped object with an "objectness score" and to determine a bounding box regression, for adjusting the anchor box 110 to fit the traffic light-shaped object with greater precision and/or accuracy.

The objectness score is used to filter unsuitable bounding box proposals for the subsequent detection and classification of forward-facing traffic lights.

The region proposal network 14 determines the objectness score and the boundary box regression based on corresponding convolution layers of the feature map obtained from the base convolutional neural network 13, namely: a region proposal network classification score layer and a region proposal network boundary box prediction layer.

For the objectness score, two estimates are output per anchor box 110, namely: the score of the anchor box 110 comprising a traffic light-shaped object and the score of the anchor box 110 comprising otherwise background features (i.e. not a traffic light-shaped object).

For the regression, four estimates may be output per anchor box 110, namely: changes in a position, such as a centre of the anchor box Δx_{center}, Δy_{center}, and changes in the size of the anchor box, e.g. Δwidth and Δheight.

The region proposal network 14 applies the bounding box regression to the anchor boxes 110 to get the bounding box proposal outputs.

The region proposal network 14 is then configured to select the bounding box proposals to output to the classifier convolutional neural network 16. If several anchors overlap too much, the region proposal network 14 may select those bounding box proposals having an objectness score that exceeds a threshold score.

Alternatively, the region proposal network 14 may be configured to select a number, N, of the bounding box proposals having the highest objectness scores. For example, N may be greater than or equal to 50 and/or less than or equal to 2000.

The selected bounding box proposals are output to the classifier convolutional neural network 16 in the form of the position of the anchor box 110 and the size of the anchor box 110. For example, the position of the centre of the anchor box, X, Y, and the size of the anchor box in width and height dimensions, W, H.

In step 48, the traffic light detection and classification system 10 uses a region of interest (Rol) pooling technique to extract, for each of the selected bounding box proposals, a set of corresponding features from the convolutional feature map.

In particular, the classifier convolutional neural network 16 extracts fixed-sized feature maps for each bounding box proposal using region of interest pooling.

For example, the classifier convolutional neural network 16 may crop the convolutional feature map according to each of the received bounding box proposals and resize the cropped convolutional feature maps to a fixed sized by interpolation, e.g. by bilinear interpolation. After cropping, max pooling may be used to get a final feature map for each bounding box proposal.

In step 50, the traffic light detection and classification system 10 classifies each bounding box proposal as a forward-facing traffic light or otherwise based on the corresponding extracted features and refines the size and/or position of the bounding box proposal for those bounding box proposals classified as forward-facing traffic lights.

Region-based convolutional neural networks for object classification are well-known in the art and so the use of the classifier convolutional neural network 16 to classify the proposed bounding boxes as forward-facing traffic lights or otherwise is not described in detail here to avoid obscuring the invention, nor is the refinement of those proposed bounding boxes corresponding to forward-facing traffic lights. Nonetheless more information about such convolutional neural networks can be found in 'Faster R-CNN:

Towards Real-Time Object Detection with Region Proposal Networks', as mentioned previously.

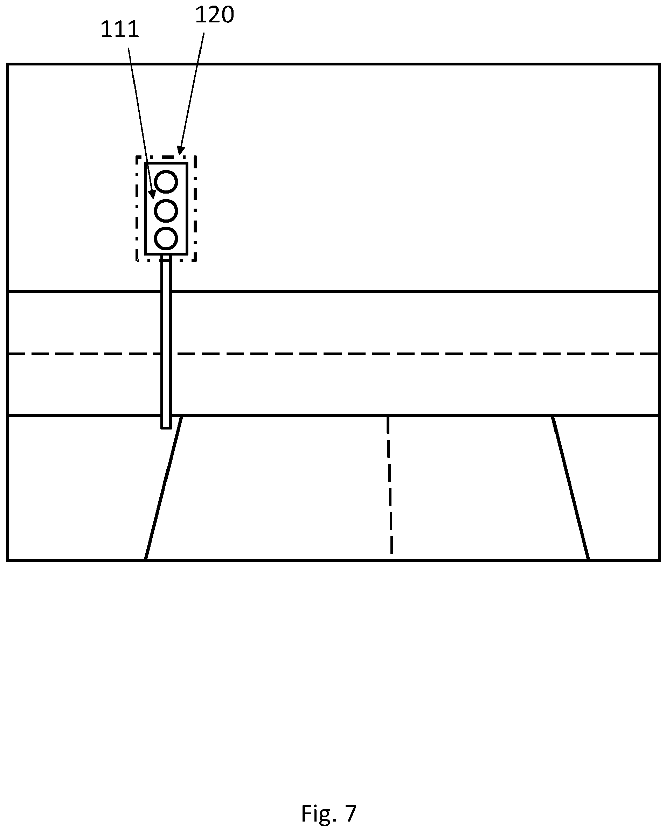

The output is one or more bounding boxes 120 for each forward-facing traffic light 111, as shown in Figure 7, and a score indicating the probability that the bounding box 120 defines a portion of the image that includes a forward-facing traffic light 111.

The traffic light detection and classification system 10 may output any bounding boxes 120 having a score exceeding a respective classification threshold to one or more other control systems of the vehicle 1 for controlling an action of the vehicle 1.

For example, once the traffic light detection and classification system 10 has determined the bounding box 120 for the traffic light 111, a portion of the image defined by the bounding box 120 is output to the traffic light status detection module 12, which determines a status of the traffic light 111.

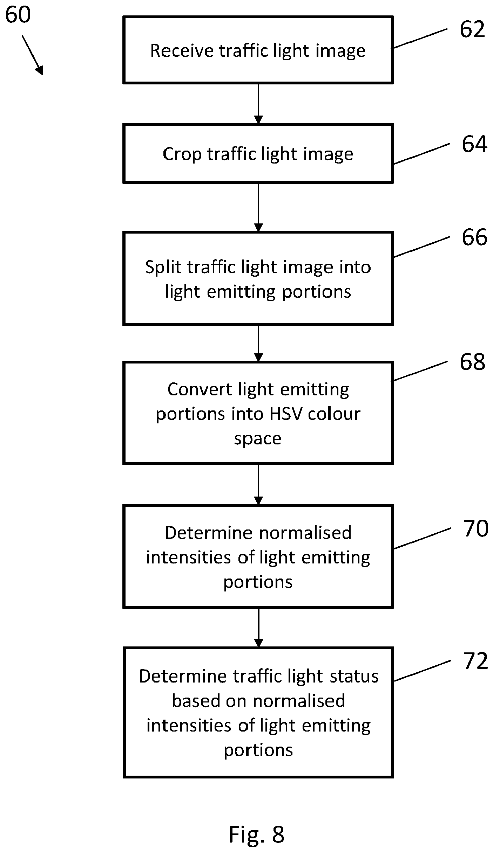

Figure 8 shows an example method 60 of operating the control system 4 to determine the status of the traffic light 111 in the image in accordance with an embodiment of the invention.

In step 62, the traffic light status detection module 12 receives the image of the traffic light 111 from the traffic light detection and classification system 10.

The image of the traffic light 111, i.e. the traffic light image, is formed from an extracted portion of the image determined by the sensor system 2, where the extracted portion is defined by the bounding box 120 determined by the traffic light detection and classification system 10 according to the method 40.

Accordingly, the traffic light image includes a traffic light section 122 that features the traffic light 111 and, in some examples, the traffic light image may also include a relatively small background section 124 arranged along one or more edges of the traffic light section 122, as shown in Figure 9. The background section features one or more background elements, included due to inaccuracies in the sizing and/or positioning of the bounding box 120 with respect to the traffic light 111. Such inaccuracies can also arise where the traffic light 11 is titled away from a vertical orientation to some extent, for example where the traffic light 11 has been damaged or faces a cambered road.

It shall be appreciated that, in some examples, the traffic light detection and classification system 10 may be configured to determine a more accurate bounding box 120 and the traffic light image output to the traffic light status detection module 12 may not include a background section 124.

In step 64, the traffic light status detection module 12 crops the traffic light image to isolate a portion of the traffic light 111 that includes the traffic lights signals 112, 114, 116, i.e. to output an area, such as a rectangular area, of the traffic light 111 that includes the three traffic light signals 112, 114, 116, and to remove the background section 124 of the image.

The size of the background section 124 is variable within a tolerance from one traffic light image to another traffic light image. The tolerance depends on the accuracy of the bounding boxes determined by the traffic light detection and classification system 10 in the method 40.

Hence, based on the calibration of the traffic light detection and classification system 10, the traffic light status detection module 12 is configured to crop a corresponding portion or percentage of the traffic light image from one or more edges of the traffic light image.

For example, the traffic light image may have a height and a width. The traffic light status detection module 12 may, for example, be configured to crop less than or equal to 10% of the width of the traffic light image from each of the vertical edges of the traffic light image. Preferably, the traffic light status detection module 12 may, for example, be configured to crop less than or equal to 5% of the width of the traffic light image from each of the vertical edges of the traffic light image. The traffic light status detection module 12 may also be configured to crop less than or equal to 5% of the height of the traffic light image from each of the horizontal edges of the traffic light image, for example. Preferably, the traffic light status detection module 12 may, for example, be configured to crop less than or equal to 3% of the height of the traffic light image from each of the horizontal edges of the traffic light image.

In an example, a maximum percentage of the height and/or width of the traffic light image to be cropped may be determined based on a standard ratio of the width, i.e. diameter, of the traffic light signals 112, 114, 116 compared to the width of the rectangular traffic light and/or a standard ratio of the total height from the bottom of the stop-signal 114 to the top of the proceed-signal 112 compared to the height of the rectangular traffic light.

It shall be appreciated that the traffic light may be oriented approximately vertically in the traffic light image and extend approximately parallel to the height of the traffic light image. Alternatively, for a horizontally oriented traffic light, the traffic light may be oriented approximately horizontally in the traffic light image and extend approximately parallel to the width of the traffic light image.

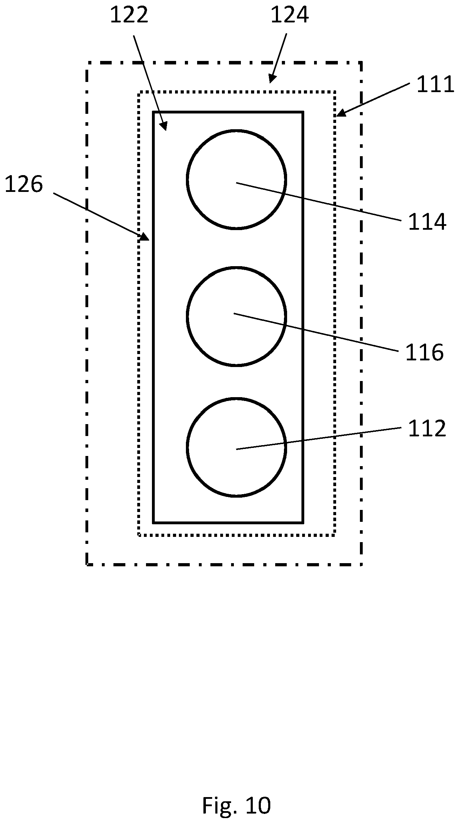

As illustrated in Figure 10, cropping the traffic light image in this manner removes the background section 124 and may remove a portion of the traffic light section 122, illustrated by dashed lines in Figure 10. Importantly, the cropped image 126 retains the stop-signal 114 and the proceed-signal 112 elements of the traffic light 111.

It shall be appreciated that, in an example, the cropping process may be improved by a machine learning process, for example, to ensure that all of the background section 124 is removed, whilst retaining all of the stop-signal 114 and proceed-signal 112 elements of the traffic light 111.

In step 66, the traffic light status detection module 12 splits the cropped image 126 into at least two light-emitting portions, including a proceed-signal portion 132 and a stop-signal portion 134, as shown in Figure 11.

For example, the traffic light status detection module 12 may divide the image of the traffic light into the proceed-signal portion 132 and the stop-signal portion 134 by dividing the traffic light image along the height of the traffic light image.

In this manner, the traffic light image may be cropped along an axis substantially aligned with the height of the traffic light 111 along which the traffic light signals 112, 114, 116 are arranged. In other words, the traffic light image is cropped along an axis substantially parallel to a major axis of the traffic light 111, which extends from the stop-signal 114 to the proceed-signal 112.

In an example, the traffic light status detection module 12 may divide the traffic light image into two portions along the height of the cropped image 226, the stop-signal portion 134 extending from a lower edge of the cropped image 226 and the proceed-signal portion 132 extending from an upper edge of the cropped image 226.

The exact position of the stop-signal 114 and the proceed-signal 112 of the traffic light 111 in the image are not known, but each of the stop-signal portion 134 and the proceed-signal portion 132 may have a height of at least 1/3 of the height of the cropped image 226 to ensure that the stop-signal portion 134 includes the stop-signal 114 of the traffic light 111 and the proceed-signal portion 132 includes the proceed-signal 112 of the traffic light 111.

In an example, one of the stop-signal portion 134 and the proceed-signal portion 132 may have a height of up to two thirds of the height of the traffic light image to additionally include the caution-signal 116 of the traffic light 111.

In another example, the traffic light status detection module 12 may split the traffic light image into three light-emitting portions, including a proceed-signal portion 132, a stop-signal portion 134 and a caution-signal portion 136 that includes the caution-signal 116 of the traffic light 111.

In this example, the traffic light status detection module 12 may divide the cropped image 226 into thirds along the height of the traffic light image.

This division is illustrated schematically in Figure 11, in which the cropped image 226 is divided into thirds along the height of the cropped image 226. The division produces a stop-signal portion 134 in a lower third of the cropped image 226, a proceed-signal portion 132 in an upper third of the cropped image 226 and a caution-signal portion 136 in a middle portion of the cropped image 226.

If the traffic light 111 is oriented approximately horizontally, the traffic light status detection module 12 may divide the traffic light image along the width of the traffic light image in substantially the same manner.

In step 68, the traffic light status detection module 12 converts each of the light-emitting portions 132, 134, 136 from a red, green, blue (RGB) colour model to a hue, saturation, value (HSV) colour model.

In particular, the HSV colour model has a cylindrical geometry and each pixel of each light-emitting portion 132, 134, 136 is represented by: i) an angular dimension representing the hue of the pixel; ii) a radial dimension representing the saturation of the pixel; and iii) a longitudinal dimension representing the intensity of the pixel, ranging from zero intensity, i.e. black, with a longitudinal position at a first end of the longitudinal axis, to a maximum intensity, i.e. white, with a longitudinal position at an opposing end of the longitudinal axis.

In this regard it shall be appreciated that the panel forming the face or rectangular area of the traffic light is typically coloured black so that the light intensity of those pixels corresponding to the black face panel of the traffic light is relatively low compared to the light intensity of any pixels corresponding to an illuminated stop-signal, proceed-signal and/or caution-signal of the traffic light.

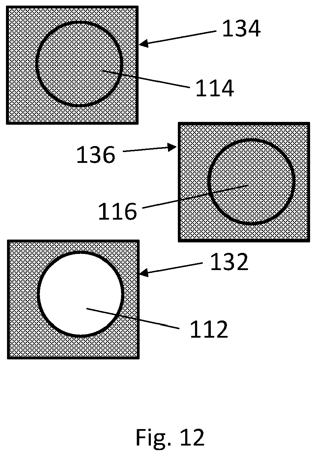

This contrast in light intensity is illustrated schematically in Figure 12 in which the low intensity pixels are shown with cross-hatching, whilst the high intensity pixels are shown with a plain background.

Methods and equations for converting between the RGB colour model and the HSV colour model are well known in the art and are not described in detail here to avoid obscuring the invention. More information can be found in "Understanding Color Models: A Review" by I. Noor, H. Mokhtar, K. Rafiqul Zaman and M. Pramod in ARPN Journal of Science and Technology. 2 (2012), for example.

In step 70, the traffic light status detection module 12 determines whether the traffic light signal in each light emitting portion 132, 134, 136 is illuminated, i.e. outputting light, by determining a normalised intensity of each of the light emitting portions 132, 134, 136.

For each light emitting portion 132, 134, 136, the normalised intensity is a total intensity of the pixels in that light emitting portion 132, 134, 136, which is normalised based on the number of pixels in that light emitting portion 132, 134, 136.

For example, the traffic light status detection module 12 may determine the number of pixels in each of the stop-signal portion 134, the proceed-signal portion 132 and, in some examples, the caution-signal portion 136. The traffic light status detection module 12 may determine a total intensity of each light emitting portion 132, 134, 136 by adding the intensities, or longitudinal dimensions, of each pixel in that light emitting portion 132, 134, 136. The traffic light status detection module 12 may then determine the normalised intensity of each light emitting portion 132, 134, 136 by dividing the total intensity of that light emitting portion 132, 134, 136 by the number of pixels determined in that light emitting portion 132, 134, 136.

It shall be appreciated that, in different images, the traffic lights may take a range of different sizes and therefore the total intensity and the number of pixels in each light-emitting portion is highly variable between images. However, through the use of the normalised intensity, the traffic light status detection module 12 is able to determine a comparable estimate of the amount of light being emitted from each light emitting portion of the traffic light, irrespective of the size of the traffic light in the image.

Where one of the stop-signal portion 134 or the proceed-signal portion 132 includes the caution-signal 116 of the traffic light 111, it shall also be appreciated that the normalised light intensity of that light emitting portion 132;134 will vary in dependence on whether the caution-signal 116 is illuminated or not and different light intensities may be used to distinguish between the different traffic light statuses as shall become clear in the following description.

In step 72, the traffic light status detection module 12 determines a status of the traffic light based on the normalised intensities of the light emitting portions 132, 134, 136.

In particular, the traffic light status detection module 12 compares the light intensity of each light emitting portion 132, 134, 136 to a threshold illumination intensity, which is indicative that the traffic light signal 112, 114, 116 in said light emitting portion 132, 134, 136 is illuminated, i.e. emitting light and therefore activated.

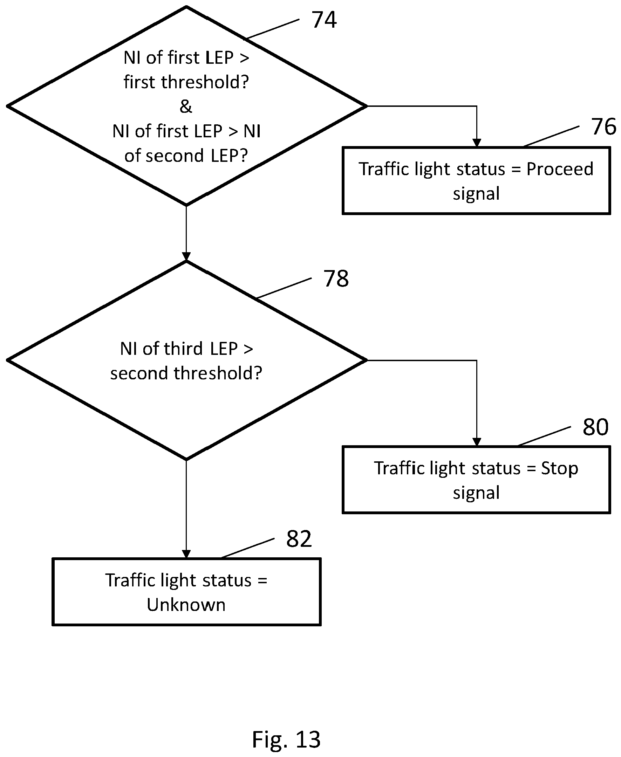

For this purpose, the method 60 may further include sub-steps 74 to 82, shown in Figure 13, which will now be described in more detail.

In sub-step 74, the traffic light status detection module 12 determines whether the proceed-signal 112 of the traffic light 111 is illuminated or not. For this purpose, the traffic light status detection module 12 is configured to compare the normalised intensity of the proceed-signal portion 132 to a first light intensity threshold and to the normalised intensity of the stop-signal portion 134.

The first light intensity threshold may be configured to replicate an expected normalised light intensity of a proceed-signal portion of a traffic light when the proceed-signal of that traffic light is not illuminated. Accordingly, the first light intensity threshold may be based on a normalised intensity of a proceed-signal portion of a calibration traffic light when said proceed-signal is not illuminated, for example.

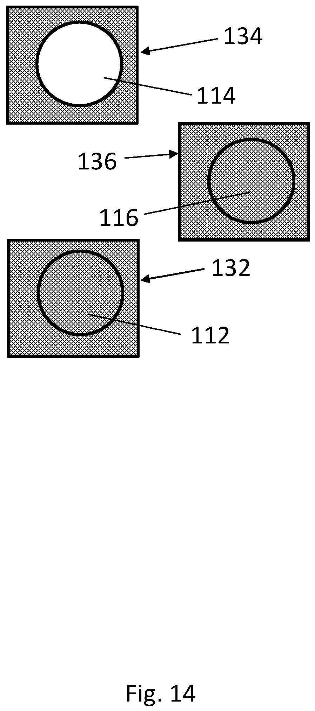

If the normalised intensity of the proceed-signal portion 132 is less than or equal to the first threshold, this is indicative that the proceed-signal 112 is not illuminated, as illustrated in Figure 14.

Conversely, if the normalised intensity of the proceed-signal portion 132 exceeds the first threshold, this is indicative that the proceed-signal 112 is illuminated, as illustrated in Figure 12.

Only one of the stop-signal 114 of the traffic light 111 and the proceed-signal 112 of the traffic light 111 will be illuminated at any given time. Hence, for the proceed-signal 112 to be illuminated, the normalised light intensity of the proceed-signal portion 132 must exceed the normalised light intensity of the stop-signal portion 134. The same is true, vice versa, for the stop-signal 114 to be illuminated. This has the effect of eliminating false positives when the normalised intensity of the proceed-signal portion 134 exceeds the first light intensity threshold due to an anomaly.

If the normalised intensity of the proceed-signal portion 132 exceeds the normalised intensity of the stop-signal portion 134, this may confirm that the proceed-signal 112 is illuminated and the traffic light status detection module 12 may determine a proceed-signal status of the traffic light 111, in sub-step 76.

The proceed-signal status may be output to one or more control systems (not shown) for controlling the operation of the vehicle 1 based on the traffic light status.

If the normalised intensity of the proceed-signal portion 132 is less than or equal to the normalised intensity of the stop-signal portion 134, this may confirm that that the proceed-signal 112 is not illuminated or otherwise correct an anomalous conclusion based on the comparison to the first light intensity threshold.

Consequently, if the traffic light status detection module 12 determines that the normalised intensity of the proceed-signal portion 132 is less than or equal to the normalised intensity of the stop-signal portion 134 and/or the first threshold, the traffic light status detection module 12 may proceed to determine whether the stop-signal 114 of the traffic light 111 is illuminated or not, in sub-step 78.

In sub-step 78, the traffic light status detection module 12 determines whether the stop-signal 114 of the traffic light 111 is illuminated or not and, for this purpose, the traffic light status detection module 12 is configured to compare the normalised intensity of the stop-signal portion 134 to a second light intensity threshold.

The second light intensity threshold may be configured to replicate an expected normalised light intensity of a stop-signal portion of a traffic light when the stop-signal of that traffic light is not illuminated.

Accordingly, the second light intensity threshold may be based on a normalised intensity of a stop-signal portion of a calibration traffic light when said stop-signal is not illuminated, for example. The second light intensity threshold may be equal to the first light intensity threshold, for example.

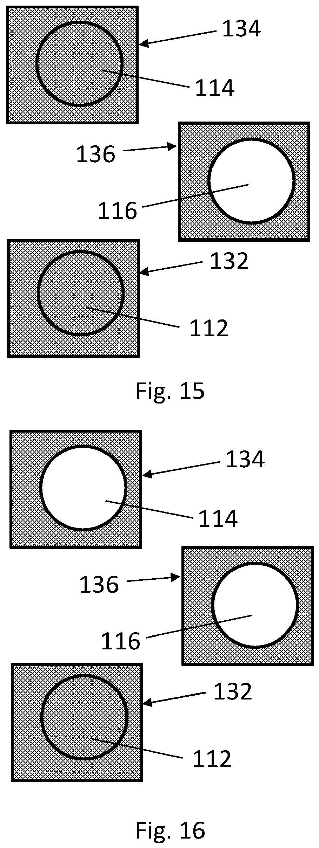

If the normalised intensity of the stop-signal portion 134 is less than or equal to the second threshold, this is indicative that the stop-signal 114 is not illuminated, as illustrated in Figure 15.

In which case, the traffic light status detection module 12 may determine that the traffic light status is unknown, in sub-step 80, and the traffic light status detection module 12 may evaluate a subsequent image of the traffic light 111 according to the method 60 to determine the status of the traffic light.

Conversely, if the normalised intensity of the stop-signal portion 134 exceeds the second threshold, this is indicative that the stop-signal 114 is illuminated, as illustrated in Figure 14.

Hence, the traffic light status detection module 12 may determine a stop-signal status of the traffic light 111, in sub-step 82. The stop-signal status may be output to one or more control systems (not shown) for controlling the operation of the vehicle 1 based on the traffic light status.

In another example (not shown), the method 60 may further include a sub-step for determining whether the caution-signal 116 of the traffic light 111 is illuminated or not in dependence on the traffic light status being unknown, as described in sub-step 80.

In which case, the normalised light intensity of the caution-signal portion 136 may be compared to a third light intensity threshold, which may be less than or equal to the first and second light intensities. If the normalised intensity of the caution-signal portion 136 exceeds the third light intensity threshold, this is indicative that the caution-signal 116 is illuminated, as illustrated in Figure 15. Hence, the traffic light status detection module 12 may determine a caution-signal status of the traffic light 111. Otherwise, the traffic light status detection module 12 may determine that the traffic light status remains unknown.

In another example (not shown), the method 60 may additionally include a sub-step for determining whether the caution-signal 116 of the traffic light 111 is illuminated in addition to the proceed signal 112 in dependence on determining that the normalised intensity of the proceed-signal portion 132 exceeds the normalised intensity of the stop-signal portion 134 and the first light intensity threshold, as described in sub-step 76.

In which case, the normalised light intensity of the caution-signal portion 136 may be compared to the third light intensity threshold. Alternatively, if the proceed-signal portion 132 includes the caution signal 116 (as in some examples), the normalised light intensity of the proceed-signal portion 132 may be compared to a fourth light intensity threshold that is greater than the first light intensity threshold to account for the additional light output from the caution-signal 116.

If the normalised intensity of the caution-signal portion 136 exceeds the third threshold, or the normalised intensity of the proceed-signal portion 134 exceeds the fourth light intensity threshold, this is indicative that the caution-signal 116 is illuminated in addition to the proceed-signal 114, as shown in Figure 16.

Hence, the traffic light status detection module 12 may determine a signal status of the traffic light 111 that is transitioning from the proceed-signal 112 to the stop-signal 114. Otherwise, the traffic light status detection module 12 may determine that the proceed-signal status remains.

In this manner, the traffic light status detection module 12 is configured to determine the status of the traffic light 111 in the traffic light image.

In another example, shown in Figure 17, the sensor system 6 may record an image comprising a first forward-facing traffic light 111 proximal to the vehicle 1 and a second forward-facing traffic light 211 distal from the vehicle 1.

The object detection and classification system 10 may determine bounding box proposals for each of the first and second forward-facing traffic lights 111, 211 according to the method 40, described above.

In this example, the first forward-facing traffic light 111 will have a higher (classification score) based on the relative proximity of the first forward-facing traffic light 111 to the vehicle 1.

On this basis, the object detection and classification system 10 may output the image of the first forward-facing traffic light 111 to the traffic light status detection module 12 based on the classification score.

The traffic light status detection module 12 may then determine the status of the first forward-facing traffic light 111 according to the method 60, described above.

Once the traffic light status detection module 12 has determined the status of the first forward-facing traffic light 111, the object detection and classification system 10 may output the image of the second forward-facing traffic light 211 to the traffic light status detection module 12 and the traffic light status detection module 12 may then determine the status of the second forward-facing traffic light 2111 according to the method 60, described above.

Alternatively, the object detection and classification system 10 may only output the image of the second forward-facing traffic light 211 to the traffic light status detection module 12 once the vehicle 1 has passed the first forward-facing traffic light 111, i.e. when the first forward-facing traffic light 111 is no longer featured in the images recorded by the sensor system 2.

It will be appreciated that various changes and modifications can be made to the present invention without departing from the scope of the present application.

## Claims

1. A computer-implemented method (20) of training a neural network for identification of a forward-facing traffic light (102) in an image, the method (20) comprising:
receiving a first set of images, each image in the first set of images comprising an annotated region, wherein the annotated region is a labelled region of said image that includes a forward-facing traffic light (102);
generating a second set of images based on one or more of the images in the first set of images, wherein generating each image of the second set of images comprises modifying a respective image in the first set of images using a data augmentation technique; and
training the neural network to identify the annotated region in each image of the first and second sets of images.

2. A computer-implemented method (20) according to claim 1, wherein, for one or more images in the second set of images, the data augmentation technique comprises at least one of:
adjusting a colour appearance parameter of the respective image or of the forward-facing traffic light (102) in the respective image;
flipping the respective image or the forward-facing traffic light (102) in the respective image;
shifting the forward-facing traffic light (102) in the respective image;
adjusting a size of the forward-facing traffic light (102) in the respective image; and
applying a jitter function to the respective image.

3. A computer-implemented method (20) according to claim 2, wherein the colour appearance parameter is a brightness and/or a contrast of the respective image.

4. A computer-implemented method (20) according to claim 2 or claim 3, wherein the colour appearance parameter of the respective image is adjusted to change a perceived time of day or weather condition in the respective image.

5. A computer-implemented method (20) according to any preceding claim, wherein the neural network is a convolutional neural network.

6. A computer-implemented method (20) according to claim 5, wherein the convolutional neural network is a region-based convolutional neural network.

7. A computer-implemented method (20) of re-training a neural network for identification of a forward-facing traffic light (102) in an image, the method (20) comprising initialising a neural network trained for identification of a traffic light in an image, prior to receiving the first set of images; and
re-training the neural network for the identification of a forward-facing traffic light (102) in an image according to the method (20) of any preceding claim.

8. A computer-implemented method (20) according to claim 7, wherein the initial neural network comprises a first set of feature maps, and wherein training the neural network to identify the annotated region in each image of the first and second sets of images comprises generating a second set of feature maps, adapted from the first set of feature maps, for the identification of a forward-facing traffic light (102) in an image.

9. A computer program comprising instructions which, when the program is executed by a computer, cause the computer to carry out the method (20) of any of claims 1 to 8.

10. A computer-readable data carrier having stored thereon the computer program of claim 9.
